# EUROPEAN PATENT APPLICATION

(11) **EP 1 448 004 A1**
(43) Date of publication of application: **18.08.2004**
(21) Application number: 04250488.6
(22) Date of filing: 29.01.2004
(51) Int. Cl.: H04Q 7/34, H04L 12/26

(54) **Developing a user activity profile**

(30) Priority: 12.02.2003 GB 0303251
(71) Applicant: Ubinetics Limited, Melbourn, Hertfordshire SG8 6DP (GB)
(72) Inventor: Windred, Philip, Melbourn Hertfordshire SG8 6ED (GB)
(74) Representative: Pratt, David Martin

(57) **Abstract**

A method of developing a UAP for a mobile telecommunications network comprises the steps of:-
a) manually developing a simple UAP;
b) loading the simple UAP onto a test mobile communications device (2) and a test application provided on a computer (3);
c) connecting the test mobile communications device and the computer to the network;
d) using the simple UAP actively by means of mobile communications device originated calls and mobile communications device terminated calls actively across the network;
e) collecting network performance data generated by said active use;
f) simulating the network by running a real application (6) on a simulated environment on a computer (7), the simulated environment being such as to simulate how that application would run on the network; and
g) tracking the behaviour of said real application on the simulated environment to generate a new UAP.

## Description

This invention relates to a method of developing a user activity profile (UAP) for a mobile telecommunications network, and for identifying the optimum network performance characteristics to suit that UAP.

An application running on a mobile telecommunications network, and in particular a packet switched network, can have a unique profile in terms of its demands on the network. The aim of the invention is to provide a method of accurately simulating the user activity associated with a mobile phone characteristic of an actual application in active use.

The present invention provides a method of developing a UAP for a mobile telecommunications network, the method comprising the steps of:-
a) manually developing a simple UAP;
b) loading the simple UAP onto a test mobile communications device and a test application provided on a computer;
c) connecting the test mobile communications device and the computer to the network;
d) using the simple UAP actively by means of mobile communications device originated calls and mobile communications device terminated calls actively across the network;
e) collecting network performance data generated by said active use;
f) simulating the network by running a real application on a simulated environment on a computer, the simulated environment being such as to simulate how that application would run on the network; and
g) tracking the behaviour of said real application on the simulated environment to generate a new UAP.

Preferably, the method further comprises the step of loading the new UAP onto the test mobile communications device and the test application provided on said computer, and repeating steps c) to g). These steps may be repeated until the new UAP of step g) is substantially the same as the new UAP of the previous step g).

Advantageously, mobile communications device originated calls are set up using a first test script, and mobile communications device terminated calls are set up by a second test script.

In a preferred embodiment the method further comprises repeating steps d) and e) to generate network performance data for a plurality of network situations. Steps d) and e) may be repeated to provide network performance data for a range of locations, for a range of times of day, and for a range of QoS parameters.

Preferably, the method further comprises the step of analysing correlations between network performance data and the UAPs generated for each of said network situations. Such correlations can then be used to optimise the network configuration to give the best possible measured performance against the range of UAPs supported on a test mobile communications device.

The invention also provides a method of simulating a mobile telecommunications network using network performance data as generated in accordance with the method defined above, the method comprising steps of running a given application on the simulated environment with any network performance data log to derive an initial UAP, and comparing the initial UAP with all the generated UAPs thereby to identify the most appropriate network performance log to use with that UAP.

The development of the UAP in this manner allows a test mobile communications device to simulate user activity autonomously without manual intervention, thereby allowing automated testing to be carried out 24 hours a day, seven days a week.

The invention further provides a method of developing a load generator for a mobile telecommunications network, the method comprising the steps of loading a respective one of the UAPs generated in accordance with the method defined above onto a respective test mobile communications device, and operating the test mobile communications devices across the network, thereby to simulate a large group of users' phones in a real network. Each of the test mobile communications devices may use the same UAP, or each may use a different UAP.

This will allow the performance of the network to be assessed under representative loading conditions. This can then be used to optimise the network performance by varying key network parameters, and then using systematic automated testing with the load generator to identify the optimal value for each of the key network parameters.

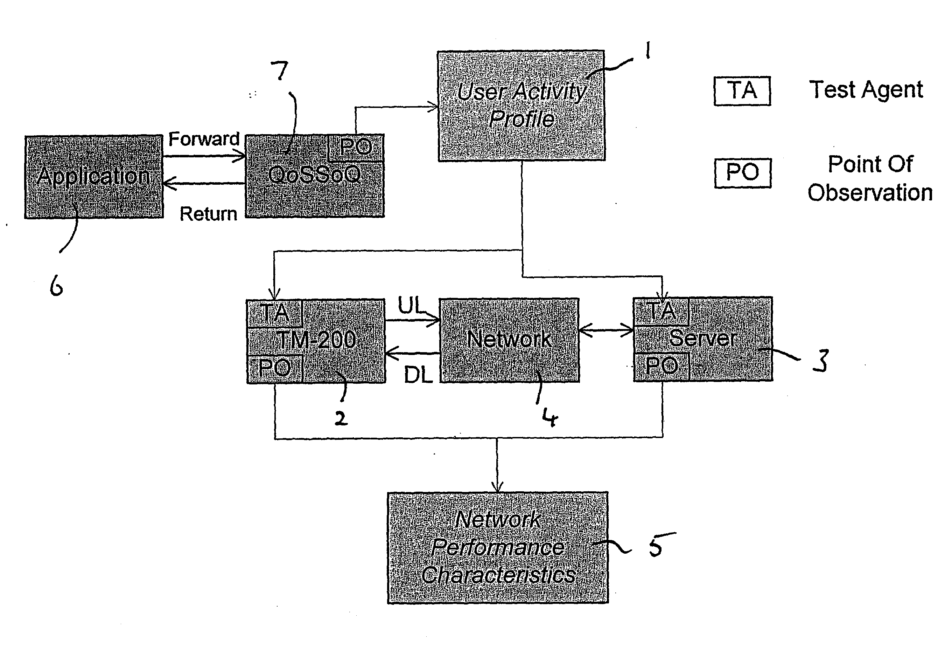

The invention will now be described in greater detail, by way of example, with reference to the drawing, the single figure of which is a block diagram illustrating the steps of one way of carrying out the invention.
1. A simple UAP is developed manually, that is to say by an engineer using his knowledge of a real application which is to be used actively across a real mobile telecommunications network. This UAP consists of four files, namely:-
   a data file containing data which will be sent by a test phone on an uplink (from the test phone to the network);
   a data file containing data which will be sent on a downlink (from the network to the phone) by a "test application" running on a PC or a remote server;
   an activity profile for determining when the test phone should send data on the uplink; and
   an activity profile for determining when the test phone should receive data on the downlink.

   The two activity profiles use a simple model to determine when the test phone should send and receive data. For example, the simple model could merely be an arbitrary timetable of active and passive uplink and downlink periods of time.
   The resulting UAP is stored in a UAP library 1, and takes the form of a combination data file which can be loaded onto a test mobile phone 2 and within a test application provided on a server 3, the server being connected to the core of a mobile telecommunications network 4, and the test mobile phone being connected to the core of the network via a radio access network. The test application is a programme run on the server 3 to simulate the activity of that server in a real network, or to simulate the activity of a PSTN user.
2. The manually-developed UAP is then used actively across the network 4. This is achieved as follows:
   For a mobile originated call, the test mobile phone 2 uses a test script to set up the call as would be appropriate for the UAP. The test script is, in effect, a set of instructions for setting up the call, and may include some or all of the following instructions:-
      request connection at (say 64 kbps) at a predetermined time (say ten minutes) after switch on of the test mobile phone;
      request a desired quality of service (QoS);
      request disconnection at a predetermined time (say five minutes) after connection;
      request triggering of the UAP when the call is connected; and
      repeat these requests for one or more subsequent calls, possibly with different parameters.

   The call set up by the test script is such as would achieve a call connection from a real mobile phone using a real network.
   For a mobile terminated call, the dedicated test application on the server 3 uses another test script to set up a call as would be appropriate for the UAP to be simulated. This test script is a similar set of instructions to those of the test script used to set up the mobile originated call. The call set up is such as would achieve a connection to a real mobile phone using a real network.
   Once a call has been set up, the test mobile phone 2 and dedicated test application on the server 3 has the capability to send data on the uplink and downlink respectively, in accordance with the UAP.
   This simulation of the UAP is controlled by the respective test script which was responsible for the call set-up. In this way, it is possible to change the UAP in accordance with the instructions contained within the test scripts.
   As required, the uplink and downlink run independently or synchronously depending on whether interaction between the uplink and the downlink is considered significant for the purposes of the test. If it is determined that the uplink and the downlink should be synchronised, then special signals are inserted into the data being exchanged between the test mobile phone 2 and the test application on the server 3 to achieve and maintain the required synchronisation. If the uplink and the downlink can be considered independently, then data transfer will be started and ended only by the test scripts.
3. During the period of the call, the test mobile phone 2 and the test application collect network performance data, which allows the network performance during the test to be characterised. This data includes, but is not limited to, the following data, all of which is time and date stamped:
   the number of call attempts necessary to establish a successful call;
   the time taken to establish the call;
   a log giving the time at which the UAP simulation starts, and the time of any changes made by the test script to the UAP simulation;
   the requested QoS parameters and the actual QoS parameters allocated by the network;
   a log of any changes to the QoS parameters during the call;
   the duration of the call;
   the number of times the call is dropped and then re-established during the call;
   a log of the time-varying user plane (u-plane) data rate on the uplink and on the downlink during the call;
   the latency data (i.e the delay between sending each packet and that packet being received);
   the average bit error rate (BER) calculated by comparing the actual data received and the data defined in the UAP;
   BER statistics to characterise how the errors are distributed within the call, and in particular to identify any BER bursts;
   radio frequency (RF) measurements collected by the test phone; and
   a log of control plane (c-plane) messages exchanged between the test mobile phone 2 and the network.

   The network performance data so collected is stored as a network performance log. As the data collected in this manner is based on u-plane traffic that is representative of a real application, the results gained have good accuracy.
4. Step 2 is then repeated to gain network performance data for a range of locations (e.g dense urban, motorway, suburban, rural etc), for a range of times of day, and for a range of QoS parameters. A respective network performance log is stored, at 5, for each of these reports.
5. The network performance logs are then analysed to identify any important correlations which may be of interest to the mobile network operator. In particular, correlations between any of the following data are assessed:
   RF measurements (signal strength, interference);
   network performance events (e.g bursts of errors, dropped calls, periods of longer packet data delays);
   c-plane events (e.g soft hand over (SHO), use of compressed mode, changes to QoS parameters, number of packet data retransmissions)); and
   the UAP (i.e changes in the instantaneous data rate) and the network performance (particularly latency data).

   This data analysis is to be used by the operator for network optimisation.
6. The network performance data (logs) collected in steps 2, 3 and 4, and stored in the memory 5, is used to provide a simulation of a mobile network within an end-to-end application test environment constituted by an application (i.e. a real application such as a game, an e-mail server etc) 6 running in a simulated environment on a PC 7. The simulated environment simulates how the application would run on a real network. The logs of network performance are effectively "replayed" as a simulation environment for end-to-end testing. As the application 6 tries to send packets of data between the two ends of the application, the simulation environment on the PC 7 causes delays and inserts errors to simulate actual network performance. Using the different network performance data collected for different cases at step 4, it is possible to run the application 6 in different simulated environments, thereby providing an indication of how the application will perform in a real network in these different environments.
   Alternatively, the network performance log can be used to derive the key parameters used to calibrate a generic internet protocol (IP) network simulation to represent the real mobile network against which the performance log was collected.
   The process of developing a network performance log and then replaying it in a simulation environment needs to identify any correlation between user activity and network performance. In particular, there is likely to be a correlation between changes in user activity (e.g changing from a passive period where no data is exchanged to an active period where data exchange restarts) and latency. For example, longer delays can be expected when the user activity is changing from passive to active compared to a steady active state. Such correlations need to be simulated by the simulation environment to ensure valid results are obtained.
7. The application test environment also tracks the behaviour of the application 6 under end-to-end testing to generate a new UAP. The new UAP has the same format as the UAP 1, but based on the actual application performance rather than one manually designed. This new UAP replaces the original, manually-developed UAP. The new UAP is stored in the UAP library 1, and the logs of network performance are stored in the memory 5. The new UAP is, therefore, a real UAP which depends on the data collected in step 6. Thus, all uplink and downlink data is captured - in particular, the application test environment tracks what data is sent and when on a packet-by-packet basis - and this data is used to create the new UAP.
8. Steps 2, 3, 4, 6 and 7 are then repeated to determine the extent to which the network performance characteristics change as a function of the UAP, and to build up a library of network performance logs in the memory 5 and UAPs in the library 1. By analysing correlations between the network performance and the UAPs, it is possible to determine which network performance log should be used in the simulation environment for each category of UAP. Step 8 is repeated until no further improvement in network performance characteristics are likely to be needed. In practice, two or three repetitions are likely to be needed
9. An accurate network simulation for any application can then be achieved by first running the application with any network performance log to derive an initial UAP. This initial UAP is then compared with the catalogue of UAPs in the library 1 to identify the most appropriate network performance log to use with that UAP. If a new application has a very distinctive UAP, it may be deemed necessary to repeat steps 2, 3 and 6 to derive a new network performance log applicable to this new application.
10. Step 8 allows a library of UAPs to be derived, each specific to a particular application. In this way, the test mobile phone 2 gains the capability to simulate accurately a range of different applications.

The method described above can be used to develop a load generator to prove the capacity of a radio access network, a load generator being a collection of phones which are co-ordinated to mimic a large group of users' phones in a real network. A load generator developed using this method provides good accuracy as the u-plane traffic is representative of real applications, and so the results gained from testing against this load generator will also be more accurate. This, in turn, allows optimisation of radio access network parameters by testing against the load generator.

Although step 5 does not form part of a method of developing a UAP, this step has a benefit, namely that the analysis carried out can be used to advise network operators of possible problems and how those might be solved. For example, a network performance log may reveal that longer delays than usual occur. Analysis of other data relevant to the operation of the network may then reveal the cause of the delay, from which it may be possible to propose to the network operator how to overcome the problem.

The method of the invention allows a test mobile phone to simulate user activity autonomously without manual intervention, thereby permitting automated testing to be continued twenty four hours a day, seven days a week.

The method of invention also permits the creation of a link between application development and the performance of a test mobile phone in a real network.

In another development, the test mobile phone 2 could be used for QoS testing, as this is likely to prove specific to each application. Thus, the ability of the test mobile phone 2 accurately to simulate the u-plane traffic for a particular application is essential for an accurate QoS measurement. The building up of a library of UAPs ensures that the test mobile phone can support QoS testing for a range of applications.

The network performance data collected by the method of the invention enables a sophisticated simulation environment to be developed for application testing. This simulation environment can then be used to optimise the design of an application in terms of its performance in a mobile phone network. Moreover, this also gives an opportunity for validation of the design of an application at an early stage of the development process.

## Claims

1. A method of developing a UAP for a mobile telecommunications network, the method comprising the steps of:-
a) manually developing a simple UAP;
b) loading the simple UAP onto a test mobile communications device and a test application provided on a computer;
c) connecting the test mobile communications device and the computer to the network;
d) using the simple UAP actively by means of mobile communications device originated calls and mobile communications device terminated calls actively across the network;
e) collecting network performance data generated by said active use;
f) simulating the network by running a real application on a simulated environment on a computer, the simulated environment being such as to simulate how that application would run on the network; and
g) tracking the behaviour of said real application on the simulated environment to generate a new UAP.

2. A method as claimed in claim 1, further comprising the step of loading the new UAP onto the test mobile communications device and the test application provided on said computer, and repeating steps c) to g).

3. A method as claimed in claim 2, wherein the steps of claim 2 are repeated until the new UAP of step g) is substantially the same as the new UAP of the previous step g).

4. A method as claimed in any one of claims 1 to 3, wherein the simple UAP is constituted by:
1) a data file containing data to be sent by the test mobile communications device on an uplink;
2) a data file containing data to be sent to the test mobile communications device on a downlink;
3) an activity profile file for determining when the test mobile communications device should send data on the uplink; and
4) an activity profile file for determining when the test mobile communications device should receive data on the downlink.

5. A method as claimed in any one of claims 1 to 4, wherein mobile communications device originated calls are set up using a first test script, and mobile communications device terminated calls are set up by a second test script.

6. A method as claimed in claim 5, wherein the network performance data includes one or more of:
1) the number of call attempts necessary to establish a successful call;
2) the time taken to establish the call;
3) a log giving the time at which UAP simulation starts, and the time of any changes made by a test script to the UAP simulation;
4) requested QoS parameters and the actual QoS parameters allocated by the network;
5) a log of any changes to the QoS parameters during the call;
6) the duration of the call;
7) the number of times the call is dropped and then re-established during the call;
8) the total u-plane data rate on the uplink and on the downlink during the call;
9) the latency data;
10) the average BER calculated by comparing the actual data received and the data defined in the UAP;
11) BER statistics to characterise how the errors are distributed within the call, and in particular to identify any BER bursts;
12) RF measurements collected by the mobile communications device; and
13) a log of c-plane message exchanged between the mobile communications device and the network.

7. A method as claimed in any one of claims 1 to 6, further comprising repeating steps d) and e) to generate network performance data for a plurality of network situations.

8. A method as claimed in claim 7, wherein steps d) and e) are repeated to provide network performance data for a range of locations, for a range of times of day, and for a range of QoS parameters.

9. A method as claimed in claim 7 or claim 8, further comprising the step of analysing correlations between network performance data and the UAPs generated for each of said network situations.

10. A method of simulating a mobile telecommunications network using network performance data as generated in accordance with the method of claim 7 or claim 8, the method comprising steps of running a given application on the simulated environment with any network performance data log to derive an initial UAP, and comparing the initial UAP with all the generated UAPs thereby to identify the most appropriate network performance log to use with that UAP.

11. A method of developing a load generator for a mobile telecommunications network, the method comprising the steps of loading a respective one of the UAPs generated in accordance with the method of claim 7 or claim 8 onto a respective test mobile communications device, and operating the test mobile communications devices across the network, thereby to simulate a large group of users' phones in a real network.
